# EUROPÄISCHE PATENTSCHRIFT

(11) **EP 0 791 014 B1**
(45) Veröffentlichungstag und Bekanntmachung des Hinweises auf die Patenterteilung: **28.01.1998**
(21) Anmeldenummer: 96929967.6
(22) Anmeldetag: 24.09.1996
(51) Int. Cl.: C08B 1/00, C08J 3/09, B01J 10/02, B01D 1/22, D01F 2/00, B01F 15/00, B01F 1/00, B01F 7/16, B01F 7/26

(54) **DÜNNSCHICHTBEHANDLUNGSAPPARAT**
THIN-FILM TREATMENT DEVICE
DISPOSITIF DE TRAITEMENT A COUCHE MINCE

(30) Priorität: 27.09.1995 AT 1605/95
(43) Veröffentlichungstag der Anmeldung: 27.08.1997
(73) Patentinhaber: LENZING AKTIENGESELLSCHAFT, 4860 Lenzing (AT)
(72) Erfinder: ZIKELI, Stefan, A-4844 Regau (AT); RAUCH, Ernst, A-4861 Schörfling (AT)
(74) Vertreter: Schwarz, Albin, Dr. Kopecky & Schwarz Patentanwälte
(86) Internationale Anmeldenummer: AT9600172
(87) Internationale Veröffentlichungsnummer: WO9711973

(56) Entgegenhaltungen:
- EP-A- 0 356 419
- WO-A-94/06530
- DE-A- 1 457 300
- DE-A- 4 429 244
- DE-B- 2 011 493

## Beschreibung

Die vorliegende Erfindung betrifft einen Dünnschichtbehandlungsapparat mit einem zylindrischen Behandlungsgefäß und einem Rotor, der im Behandlungsgefäß zentrisch gelagert ist, welcher Rotor Rührelemente besitzt, die verstellbar sind und einen Neigungswinkel zur Achse des Rotors aufweisen. Die vorliegende Erfindung betrifft insbesondere einen Dünnschichtbehandlungsapparat zur Herstellung einer homogenen, formbaren, hochviskosen Lösung von Cellulose in einem tertiären Aminoxid aus einer Suspension von Cellulose in einer Lösung des tertiären Aminoxides in einem Nicht-Lösungsmittel für Cellulose, insbesondere Wasser.

Aus der US-PS 2,179,181 ist bekannt, daß tertiäre Aminoxide Cellulose zu lösen vermögen und daß aus diesen Lösungen durch Fällung in einem wäßrigen Medium cellulosische Formkörper hergestellt werden können.

In der US-A - 4,246,221 ist ein Verfahren zur Herstellung spinnbarer Celluloselösungen beschrieben, welches als Ausgangsmaterial u.a. eine Mischung von Cellulose in wäßrigem N-Methylmorpholin-N-oxid (NMMO) verwendet. Das vorbekannte Verfahren wird diskontinuierlich durchgeführt und weist bis zur spinnbaren Lösung folgende 4 Schritte auf:
1. Behandeln einer Mischung von Zellstoff in einer wäßrigen Lösung von NMMO in einem Mischgefäß, indem die Mischung einem Vakuum und erhöhter Temperatur ausgesetzt und wobei eine Lösung gebildet wird,
2. Zwischenlagern der Lösung in einem Tank,
3. Zwischenfiltrieren der Lösung, und
4. Nachbearbeiten der Lösung in einem Extruder, um die spinnbare Lösung zu erhalten.

Gemäß diesem Verfahren kann Cellulose nur diskontinuierlich gelöst werden, was darüberhinaus viel Zeit in Anspruch nimmt.

Die Lösungsgeschwindigkeit beträgt weniger als 7 g Cellulose pro Minute.

Die geringe Lösungsgeschwindigkeit war seinerzeit für den Fachmann aufgrund der polymeren Natur der Cellulose nicht ungewöhnlich. Auch in den Jahren nach der Veröffentlichung der US-A - 4,246,221 war die Fachwelt der Meinung, daß Cellulose nur in einem mehrstufigen Prozeß in wäßrigen Aminoxidlösungen gelöst werden kann. Man nahm an, daß im NMMO-Verfahren prinzipiell zwei Stufen notwendig sind, die Cellulose aus einer Suspension in Lösung zu bringen, wobei man die erste Stufe darin sah, die Suspension in einer Mischeinrichtung unter Wärmeeinwirkung und unter Vakuum zu behandeln, um Wasser zu entfernen, die Cellulose zu quellen und im wesentlichen jene Konzentration an Wasser einzustellen, die eine Auflösung der Cellulose zuläßt. Die zweite Stufe bestand in einem Bearbeiten der gequollenen Cellulose in einem Doppelschneckenextruder mit Scherelementen, in welchem die gequollene Cellulose schließlich in eine spinnbare Lösung übergeführt wurde (D. Loubinoux and S. Chaunis; "An Experimental Approach to Spinning New Cellulose Fibers with N-Methylmorpholine-Oxide as Solvent", Lenzinger Berichte, Heft 59, Seiten 105-107, August 1985). Die Verwendung eines Doppelschneckenextruders mit Scherelementen wurde vorgeschlagen, um die hohen Scherkräfte vorzusehen, die für die Herstellung von spinnbaren Celluloselösungen als notwendig erachtet wurden.

Demgegenüber ist mit der im Jahre 1990 veröffentlichten EP-A - 0 356 419 eine Technik bekannt geworden, mit der die mehrstufige Extrudertechnik überwunden werden konnte und eine Suspension von Cellulose in einer wäßrigen Lösung eines Aminoxides kontinuierlich und sogar in einem einzigen Schritt in eine spinnbare Lösung übergeführt werden kann. Gemäß dieser Technik wird zunächst die Suspension unter intensivem Mischen schichtartig auf einer Heizfläche ausgebreitet und behandelt, indem sie unter intensivem Mischen über die Heizfläche transportiert wird, wobei sich die Schicht erwärmt. Gleichzeitig wird die Schicht während der Behandlung einem Unterdruck derart ausgesetzt, daß Wasser verdampft und jene Konzentrationsverhältnisse eingestellt werden, die es gemäß dem Zustandsdiagramm für das ternäre Stoffgemisch Cellulose/Aminoxid/Wasser gestatten, daß die Auflösung der Cellulose stattfindet. Überraschenderweise geht die Cellulose bereits in diesem Stadium, also noch während des Transportes der Schicht über die Heizfläche, in Lösung, sodaß ein Extruder nicht verwendet werden braucht und die Lösung kontinuierlich und einstufig gebildet werden kann.

Die Dünnschichttechnik gestattet darüberhinaus, die Cellulose um ein Vielfaches schneller aufzulösen, als dies mit der zweistufigen Extrudertechnik gelingt. Dies war völlig unerwartet, weil in einem Dünnschichtbehandlungsapparat naturgemäß nicht so hohe Scherkräfte auftreten, wie sie in einem Doppelschneckenextruder von den Scherelementen hervorgerufen werden und zur Lösungsbildung als unabdingbar erachtet wurden.

Das oben beschriebene Dünnschichtbehandlungsverfahren wird zweckmäßigerweise in einem Apparat durchgeführt, wie er in der EP-A - 0 356 419 beschrieben ist. Dieser Apparat wird als Dünnschichtbehandlungsapparat bezeichnet. Eine Ausführungsform eines Dünnschichtbehandlungsapparates ist beispielsweise ein sogenannter Filmtruder, wie er von der Firma Buss AG (Schweiz) hergestellt wird. Ein Dünnschichtbehandlungsapparat ist auch in der DE-OS 2 011 493 beschrieben. Ferner werden Dünnschichtbehandlungsapparate von der Firma Focchi, Italien, unter der Typenbezeichnung SV hergestellt.

Die im Jahre 1994 veröffentlichte WO 94/06530 benützt die aus der EP-A - 0 356 419 vorbekannte Dünnschichttechnik, um aus einer Mischung von Cellulose in einer wäßrigen Lösung eines tertiären Aminoxides zu einer formbaren Lösung zu gelangen.

Das Verfahren wird analog einer in der EP-A - 0 356 419 vorbeschriebenen Ausführungsform in einem Filmtruder durchgeführt. Das Verfahren der WO 94/06530 stellt sich die Aufgabe, Energie zu sparen und schlägt zur Lösung dieser Aufgabe vor, den Rotor langsamer zu drehen.

Wie oben erwähnt, wird auch das Verfahren der WO 94/06530 in einem Filmtruder bzw. Dünnschichtbehandlungsapparat durchgeführt. In der WO 94/06530 wird dieser Apparat jedoch als Dünnschichtverdampfer bezeichnet. Zum Zwecke der Klarheit der vorliegenden Beschreibung und des besseren Verständnisses der zur Herstellung von Celluloselösungen angewandten Dünnschichttechnik wird darauf hingewiesen, daß Dünnschichtbehandlungsapparate und Filmtruder nicht als Dünnschichtverdampfer bezeichnet werden sollten, da der Fachmann unter Dünnschichtverdampfer andersartige Apparate subsummiert, in denen das erfindungsgemäße Verfahren aber nicht durchgeführt werden kann. Dünnschichtverdampfer sind zwar im Aussehen jenen Apparaten ähnlich, die in der EP-A - 0 356 419 und in der WO 94/06530 zur Herstellung der Celluloselösung verwendet werden, tatsächlich bestehen jedoch gravierende, funktionsbedingte Unterschiede in der Bauweise von Dünnschichtverdampfern einerseits und Filmtrudern bzw. Dünnschichtbehandlungsapparaten andererseits. Auf diese Unterschiede weisen auch die Herstellerfirmen hin (siehe z. B. Howard L. Freese und Hans D. Aeppli, "Luwa-Filmtruder Type HS", Fiber Producers Buyers Guide, 2. Ausgabe, Seite 116, April 1974).

Dünnschichtverdampfer sind lediglich geeignet, flüchtige Komponenten aus einer Flüssigkeit abzudampfen, die unter dem Einfluß der Schwerkraft über die Heizfläche des Dünnschichtverdampfers fließen kann ("Ullmanns Encyklopädie der technischen Chemie", 4. Auflage, Band 2, Seite 657, 1972, Verlag Chemie GmbH, Weinheim/Bergstraße, DE). Ein Fließen unter Schwerkraft setzt aber voraus, daß die Viskosität nicht zu hoch ist, wobei als obere Grenze, bei welcher ein Fließen unter Schwerkraft noch möglich ist, 15 Pa.s angenommen wird ("Ullmanns Encyklopädie der technischen Chemie", 1972, 4. Auflage, Band 2, Seite 657). Demgegenüber können formbare Celluloselösungen Viskositäten bis zu 15000 Pa.s aufweisen. Es liegt somit auf der Hand, daß ein derartiger Dünnschichtverdampfer nicht verwendet werden kann, hochviskose Celluloselösungen herzustellen.

In der EP-A - 0 356 419 ist ein Dünnschichtbehandlungsapparat beschrieben, dessen Rotorblätter verstellbar sind, sodaß der Neigungswinkel, das ist der Winkel, den die Rotorblätter zur Achse des Rotos bilden, verstellt werden kann.

Ebenso sind Vertikaltrockner bekannt, die einen Rotor aufweisen, welcher an Scharnieren drehbare Pendelblätter aufweist. Derartige Vertikaltrockner dienen zur Herstellung von festen Stoffen und Kristallen aus Lösungen. Die Pendelblätter schwingen beim Zerschlagen des Kristallbreies oder beim Abschlagen von Verkrustungen an der Heizwand hin und her (Fritz Widmer: Zum Einsatz von Dünnschichtapparaten bei hochviskosen Medien und bei der Erzeugung von Trockenprodukten; Sonderdruck 95 (1971), Seiten 772-780 aus "Chemikerzeitung").

Sämtliche Dünnschichtbehandlungsapparate des Standes der Technik haben als Nachteil gemeinsam, daß die Verarbeitung eines Rohstoff, in welchem zeitabhängige Prozesse ablaufen, nicht befriedigend genau gesteuert werden kann. Es wäre beispielsweise wünschenswert, die Verweilzeit des zu verarbeitenden Rohstoffes in Abhängigkeit dieser zeitabhängigen Produkte zu steuern, um beispielsweise ein Produkt, welches sich im Laufe der Behandlung im Dünnschichtbehandlungsapparat bildet, möglichst schnell aus dem Apparat auszutragen, wenn beispielsweise Zersetzungsprozesse im Produkt ablaufen, die sich auf die Qualität des Endproduktes nachteilig auswirken. Ferner kann es vorteilhat sein, gewisse Vorgänge, z.B. ein Auflösen eines Feststoffes in einem Lösungsmittel, an einer bestimmte Höhe des Dünnschichtbehandlungsapparates ablaufen zu lassen, in der z.B. die exakte Temperatur für das Auflösen eingestellt werden kann.

Die vorliegende Erfindung setzt sich zum Ziel, einen Dünnschichtbehandlungsapparat zur Verfügung zu stellen, in welchem die Verweilzeit des zu behandelnden Rohstoffes gesteuert und den spezifischen Erfordernissen des jeweiligen Einzelfalles angepaßt werden kann.

Der erfindungsgemäße Dünnschichtbehandlungsapparat mit einem zylindrischen Behandlungsgefäß und einem Rotor, der im Behandlungsgefäß zentrisch gelagert ist, welcher Rotor Rührelemente besitzt, welche verstellbar sind und einen Neigungswinkel zur Achse des Rotors aufweisen, ist dadurch gekennzeichnet, daß der Rotor einen zylindrischen Mantel aufweist, in welchem Rotorblätter drehbar gelagert sind, wobei der Neigungswinkel über einen Mechanismus, der im Inneren des Rotors angeordnet ist, verstellt werden kann. Die Rotorblätter werden somit nicht von außen, sondern von innen verstellt. Ein Verstellmechanismus im Inneren des Rotors gestattet eine Verstellung des Neigungswinkels, ohne daß der Rotor aus dem Dünnschichtbehandlungsapparat ausgebaut werden muß. Auf diese Weise ist es sehr einfach möglich, durch Zugriff über das Brüdenrohr des Dünnschichtbehandlungsapparates den Neigungswinkels der Rotorblätter zur Achse des Rotors zu verstellen und die Transportgeschwindigkeit des zu behandelnden Rohstoffs über die Heizfläche zu steuern.

Der Mechanismus, mit welchem der Neigungswinkel verstellt werden kann, besteht im wesentlichen aus mindestens einer Trägerplatte, die im Rotor im rechten Winkel zur Achse des Rotors angeordnet ist, und mindestens einem Stellglied, das mit einem Rotorblatt fix verbunden ist, wobei das Rotorblatt über eine axiale Bewegung der Trägerplatte bewegt wird.

Eine bevorzugte Ausführungsform des erfindungsgemäßen Dünnschichtbehandlungsapparates ist dadurch gekennzeichnet, daß die mindestens eine Trägerplatte durch Drehen einer Welle bewegt wird, die im zylindrischen Rotor zentrisch gelagert ist und durch das Zentrum der mindestens einen Trägerplatte führt, wobei die Welle an ihrer Außenseite ein Schraubengewinde aufweist, welches in ein Gegengewinde eingreift, das im Inneren einer zylindrischen Hülse vorgesehen ist, an welcher die mindestens eine Trägerplatte befestigt ist.

Eine weitere bevorzugte Ausführungsform des erfindungsgemäßen Dünnschichtbehandlungsapparates ist dadurch gekennzeichnet, daß mindestens zwei Trägerplatten vorgesehen sind, die voneinander unabhängig in Richtung der Achse des Rotors bewegt werden können.

Diese Ausführungsform des erfindungsgemäßen Dünnschichtbehandlungsapparates gestattet das Vorsehen von mindestens 2 Zonen mit unterschiedlicher Transportgeschwindigkeit des zu behandelnden Gutes.

Es hat sich als vorteilhaft erwiesen, wenn der Rotor 20 bis 50 Rotorblätter pro Quadratmeter Fläche des Rotormantels aufweist.

Es hat sich gezeigt, daß sich im erfindungsgemäßen Dünnschichtbehandlungsapparat ganz ausgezeichnet Suspensionen von Cellulose in formbare Lösungen überführen lassen. Die Erfindung betrifft somit ferner die Verwendung des erfindungsgemäßen Dünnschichtbehandlungsapparates zur Herstellung einer formbaren Celluloselösung aus einer Suspension von Cellulose in einer Lösung eines tertiären Aminoxids in einem Nicht-Lösungsmittel für Cellulose, insbesondere Wasser. Eine Suspension, die mit dem erfindungsgemäßen Dünnschichtbehandlungsapparat vorteilhaft verarbeitet wird, enthält: zwischen 50 und 72 Masse% NMMO, zwischen 19 und 40 Masse% Wasser und zwischen 7 und 14 Masse% Cellulose.

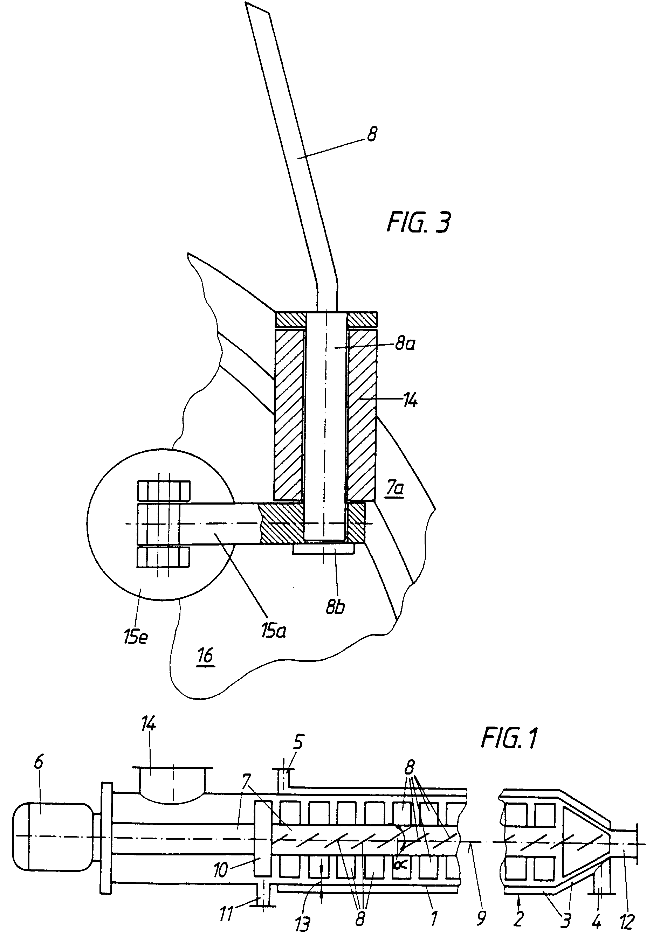

An Hand der beigefügten Zeichnung wird die Erfindung noch näher erläutert. Die Zeichnung zeigt in der Figur 1 einen teilweisen Längsschnitt eines bekannten Filmtruders (siehe z.B. Erich Heimgartner, "Devolatilisation of Plastics", in Ingenieurwissen, Seiten 69-97, Düsseldorf 1980, VDI-Verlag GmbH).

Mit 1 ist die Innenwand eines vorzugsweise aufrecht stehenden Rotationskörpers bezeichnet, der in der Darstellung nahezu über die gesamte Länge als zylindrischer Behälter 2 ausgebildet ist. Die Innenwand 1 ist größtenteils von einem Heizmantel 3 umgeben mit Anschlüssen 4 und 5 für das Heizmedium, wobei der Anschluß 4 der Zuführung des Heizmediums und der Anschluß 5 seiner Abführung dient.

Im Behälter 2 ist zentrisch ein vom Motor 6 angetriebener Rotor mit daran angesetzten Rotorblättern 8 gelagert. Die Rotorblätter 8 weisen einen Neigungswinkel a zur Achse 9 des Rotors 7 auf.

Über den Rotorblättern 8 ist am Rotor 7 ein Verteilring 10 angebracht, der die durch den Einlaß 11 eingebrachte Cellulosesuspension an der Innenwand 1 schichtartig ausbreitet. Der Verteilring 10 befindet sich somit in Höhe des Einlasses 11.

Am unteren Ende ist der Behälter 2 kegelstumpfförmig verjüngt mit einem Auslaß 12 für die homogene Celluloselösung. Die Rotorblätter 8 weisen im gesamten Bereich des Behälters 2 einen radialen Abstand 13 zur Innenwand 1 des Behälters 2 auf, der maximal 20 mm beträgt und über die Länge des Behälters 2 konstant oder variabel sein kann.

Am oberen Teil des Behälters 2, und zwar oberhalb der Ebene des Verteilringes 10, ist eine öffnung 14 zur Evakuierung des Behälters 2 und zum Abziehen von Wasserdampf vorgesehen.

Die Funktion der Einrichtung ist folgende:

Die Cellulosesuspension wird - gegebenenfalls in vortemperiertem Zustand - kontinuierlich durch den Einlaß 11 in den Behälter 2 eingebracht, der unter vermindertem Druck steht, dort vom Verteilring 10 erfaßt, an der Innenwand ausgebreitet und von den Rotorblättern 8 entlang der indirekt geheizten Innenwand 1, die als Heizfläche dient, zum Auslaß 12 am unteren Ende des Behälters 2 transportiert. Für die indirekte Beheizung eignen sich Wärmeträgermedien, wie Wasser, öl oder Dampf.

Während des Transportes der Cellulosesuspension entlang der indirekt beheizten Innenwand 1 wird die Suspension erwärmt, wobei gleichzeitig infolge des verminderten Druckes Wasser verdampft, so daß das tertiäre Aminoxid aufkonzentriert wird und jener Zustand erreicht wird, daß die Cellulose in Lösung gehen kann. Durch die ständige Umwälzung der Cellulosesuspension in der dünnen Schicht geht die Cellulose innerhalb sehr kurzer Zeit in Lösung.

Aufgrund des Neigungswinkels a der Rotorblätter 8 zur Achse des Rotors wird die Suspension nach unten transportiert.

Jedes Rotorblatt 8 einer vertikalen Reihe von Rotorblättern transportiert die Suspension beim Darüberstreichen etwas weiter nach unten, worauf sie von einem Rotorblatt der nachfolgenden Reihe Rotorblätter erfaßt, ausgebreitet bzw. noch weiter nach unten transportiert wird. Dieses Weitertransportieren setzt natürlich voraus, daß sich die Bereiche, die von den einzelnen Rotorblättern überstrichen werden, überlappen.

Der Wasserdampf sollte im Gegenstrom zur Richtung des Transportes der Suspension abgezogen werden. Für einen raschen Abzug des Wasserdampfes sollte ein genügend großer Brüdenraum vorgesehen werden, der dann gegeben ist, wenn das Verhältnis der Länge zum Durchmesser des zylindrischen Teiles des Behälters 2 einen Wert zwischen 4 und 8 aufweist.

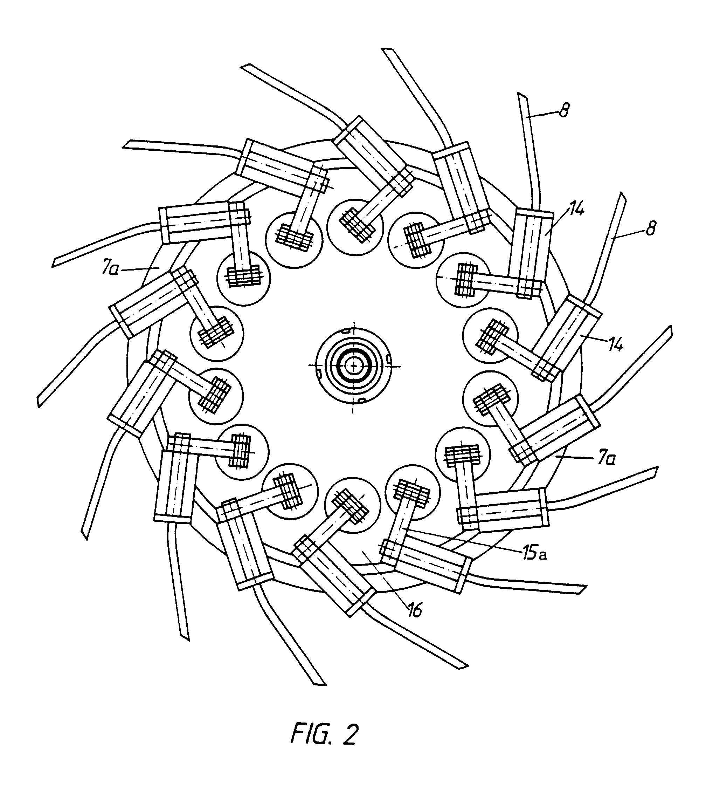

Mit den Figuren 2, 3, 4, 5 und 6 wird eine Ausführungsform des Rotors eines erfindungsgemäßen Dünnschichtbehandlungsapparates erläutert.

Figur 2 zeigt einen horizontalen Schnitt durch einen zylindrischen, rohrförmigen Rotor, dessen Mantel in der Figur 2 als Kreisring mit der Bezugsziffer 7a dargestellt ist. Der Rotor weist in der Schnittebene vierzehn Rotorblätter 8 auf. Die Rotorblätter 8 sind jeweils in Buchsen 14, die in den Mantel 7a des Rotor eingebaut sind, drehbar gelagert. Jedes Rotorblatt 8 wird jeweils über ein Stellglied 15a bewegt.

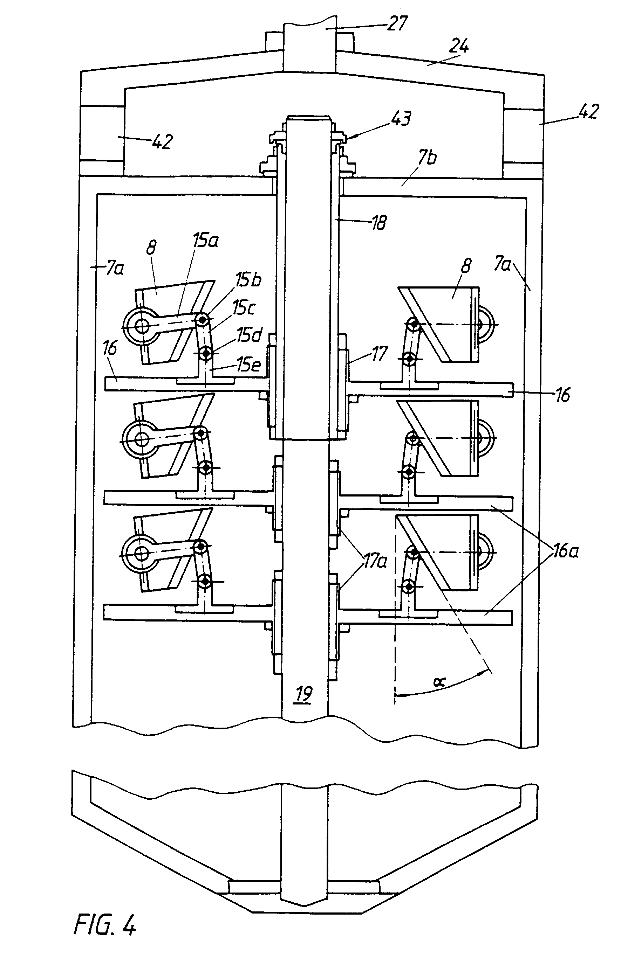

Figur 3 zeigt einen Ausschnitt der Figur 2 in vergrößertem Maßstab. In der Figur 3 ist ein Rotorblatt 8 zu sehen, das in der Buchse bzw. Hülse 14 drehbar gelagert ist. Das Rotorblatt 8 ragt mit seinem stabförmig ausgebildeten Fortsatz 8a in das Innere des Rotors und ist mittels eines Sicherungselementes 8b mit dem Stellglied 15a verbunden.

In Figur 4, welche einen Teil einer Ausführungsform des erfindungsgemäßen Rotors veranschaulicht, ist ersichtlich, daß das Stellglied 15a über ein Gelenk 15b mit einem Zwischenglied 15c verbunden ist, welches wiederum über ein Gelenk 15d mit einer Basis 15e verbunden ist, die fix an eine Trägerplatte 16 montiert ist. Die Trägerplatte 16 weist in ihrem Zentrum eine rohrförmige Hülse 17 mit einem Innengewinde, welches in das Gegengewinde einer Hohlwelle 18 eingreift. Durch Drehen der Hohlwelle 18 kann die Trägerplatte 16 nach oben bzw. nach unten bewegt werden. Diese Bewegung wird über die Basis 15e, das Zwischenglied 15c auf das Stellglied 15a übertragen, welches das Rotorblatt 8 dreht. Auf diese Weise wird der Neigungswinkel α geändert.

In der Figur 4 ist nur eine einzige Trägerplatte 16 dargestellt, die über die Hohlwelle 17 bewegt werden kann. Es liegt auf der Hand, daß mehrere, übereinander liegende Trägerplatten 16 vorgesehen sein können. Diese Trägerplatten werden gleichzeitig bewegt und verstellen den Neigungswinkel der zugehörigen Rotorblätter 8 in gleichem Ausmaß.

In der in Figur 4 dargestellten Ausführungsform weist der erfindungsgemäße Rotor noch eine Vollwelle 19 auf, die teilweise in der Hohlwelle 18 geführt wird und durch Drehen Trägerplatten 16a bewegen kann. In der Figur 4 sind zwei übereinanderliegende Trägerplatten 16a dargestellt. Im Normalfall werden jedoch mehrere Trägerplatten 16a vorgesehen sein. Diese Ausführungsform gestattet, daß die Trägerplatten 16a unabhängig von der Trägerplatte 16 bewegt und dadurch die Neigungswinkel verschieden geändert werden.

Es ist dem Fachmann verständlich, daß auf die beschriebene Art und Weise mehrere Hohlwellen vorgesehen sein können, um eine noch größere Flexibilität in der Einstellung der Neigungswinkel der Rotorblätter zu haben.

Die Vollwelle 19 ist auf herkömmliche Weise im Boden des erfindungsgemäßen Rotors drehbar gelagert.

Die mechanische Verbindung des in Figur 4 gezeigten Rotors an die Antriebswelle 27 des Dünnschichtbehandlungsapparates ist mit der Bezugsziffer 24 bezeichnet.

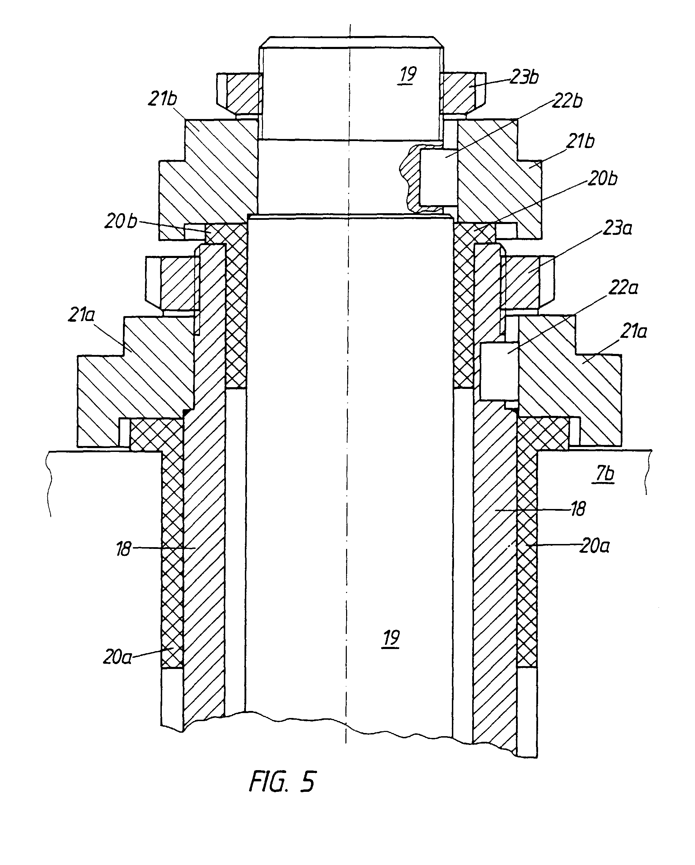

Der Mechanismus 43 zum Verdrehen der in der Figur 4 gezeigten Hohlwelle 18 und Vollwelle 19 kann über Öffnungen 42, die in der Verbindung 24 vorgesehen sind, bedient werden. Dieser Mechanismus 43 ist im Detail in der Figur 5 dargestellt.

Figur 5 zeigt die Hohlwelle 18, die über einen ringförmigen Abstandhalter 20a in den oberen Teil 7b des Rotormantels eingepaßt ist. Auf dem Abstandhalter 20a sitzt ein Ring 21a, der mit der Hohlwelle 18 kraftschlüssig verbunden ist. Die schlüssige Verbindung ist mit der Bezugsziffer 22a bezeichnet. Durch Verdrehen des Ringes 21a kann die Hohlwelle 18 verdreht werden. Nach Verdrehung wird die Position der Hohlwelle 18 mit der Schraubenmutter 23a fixiert.

Die Verdrehung der Vollwelle 19 geschieht in analoger Weise: die Vollwelle 19 ist über einen ringförmigen Abstandhalter 20b in den oberen Teil der Hohlwelle 18 eingepaßt ist. Auf dem Abstandhalter 20b sitzt ein Ring 21b, der mit der Vollwelle 19 kraftschlüssig verbunden ist. Die kraftschlüssige Verbindung ist mit der Bezugsziffer 22b bezeichnet. Durch Verdrehen des Ringes 21b kann die Vollwelle 19 verdreht werden. Nach Verdrehung wird die Position der Vollwelle 19 mit der Schraubenmutter 23b fixiert.

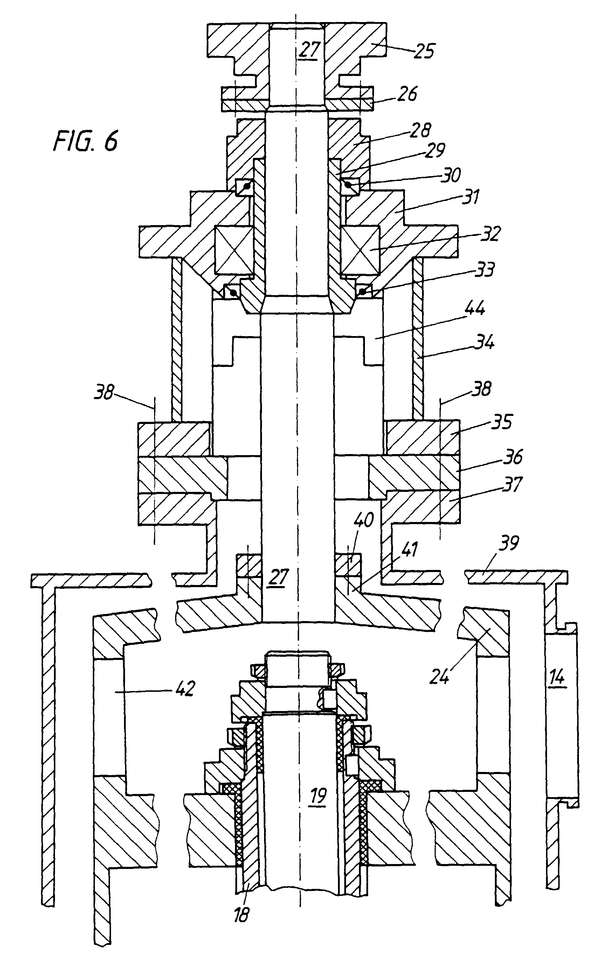

Die Figur 6 zeigt die Lagerung der Antriebswelle 27 des Dünnschichtbehandlungsapparates. Diese Antriebswelle 27 ist über den Kupplungsflansch 25 mit dem Motor (nicht gezeigt) verbunden, der antriebsseitig ebenfalls mit einem Gegen-Kupplungsflansch (nicht gezeigt) verbunden ist. Die Bezugsziffer 26 bezeichnet ebenfalls eine Kupplung, die eine kleine Elastizität aufweist, um eventuelle Schrägstellungen zwischen Motor und Antriebswelle 27 ausgleichen zu können.

Die Lagerung der Antriebswelle 27 erfolgt über das Lager 32, welches im Lagergehäuse 31 untergebracht ist. Ferner sitzt das Lager 32 auf einer Wellenschutzhülse 29. Mit der Bezugsziffer 28 ist ein Lagerdeckel 28 bezeichnet.

Da der Betrieb des Dünnschichtbehandlungsapparates auch unter Vakuum erfolgen kann, ist eine Gleitringdichtung 44 vorgesehen, die gegen den Umgebungsdruck abdichtet. Diese Gleitringdichtung 44 ist innerhalb eines rohrförmigen Dichtungsgehäuses 34 und dem Basisflansch 35 auf dem Zentrierflansch 36 aufgesetzt. Da die Gleitringdichtung 44 mit einer Sperrflüssigkeit (nicht dargestellt), die sich innerhalb des Dichtungsgehäuses 34 befindet, betrieben wird, sind Dichtringe 30, 33 vorgesehen, sodaß einerseits keine Sperrflüssigkeit nach außen dringen kann und andererseits kein Staub von außen in das Lager 32 dringen kann.

Die Bezugsziffer 37 steht für einen am oberen Teil 39 des Dünnschichtbehandlungsapparates angebrachten Gegenflansch, der mittels Schrauben 38 mit dem Basisflansch 35 des Dichtungsgehäuses 34 und dem Zentrierflansch 36 verbunden ist.

Die Bezugsziffern 40 und 41 bezeichnen die Kupplung zum Rotor bzw. die Mitnehmerkupplung am Rotor.

Die Bezugsziffer 24 steht für den kraftschlüssigen Verbindungsteil des Rotors mit der Antriebswelle 27. Dieser Verbindungsteil 24 besitzt seitliche öffnungen 42, über die auf den Verstellmechanismus zugegriffen werden kann. Die öffnung 42 ist über die öffnung 14, die zur Evakuierung und zum Abzug von Brüden dient, zu erreichen.

## Patentansprüche

1. Dünnschichtbehandlungsapparat mit einem zylindrischen Behandlungsgefäß und einem Rotor, der im Behandlungsgefäß zentrisch gelagert ist, welcher Rotor Rührelemente besitzt, welche verstellbar sind und einen Neigungswinkel a zur Achse des Rotors aufweisen, dadurch gekennzeichnet, daß der Rotor (7) einen zylindrischen Mantel (7a) aufweist, in welchem Rotorblätter (8) drehbar gelagert sind, wobei der Neigungswinkel a über einen Mechanismus, der im Inneren des Rotors (7) angeordnet ist, verstellt werden kann.

2. Dünnschichtbehandlunsgapparat nach Anspruch 1, dadurch gekennzeichnet, daß der Mechanismus, mit welchem der Neigungswinkel a verstellt werden kann, im wesentlichen aus mindestens einer Trägerplatte (16), die im Rotor (7) im rechten Winkel zur Achse des Rotors (7) angeordnet ist, und mindestens einem Stellglied (15d; 15a) besteht, das mit einem Rotorblatt (8) fix verbunden ist, wobei das Rotorblatt (8) über eine axiale Bewegung der Trägerplatte (16; 16a) bewegt wird.

3. Dünnschichtbehandlungsapparat nach Anspruch 2, dadurch gekennzeichnet, daß die mindestens eine Trägerplatte (16; 16a) durch Drehen einer Welle (18; 19) bewegt wird, die im zylindrischen Rotor (7) zentrisch gelagert ist und durch das Zentrum der mindestens einen Trägerplatte (16; 16a) führt, wobei die Welle (18; 19) an ihrer Außenseite ein Schraubengewinde aufweist, welches in ein Gegengewinde eingreift, das im Inneren einer zylindrischen Hülse (17; 17a) vorgesehen ist, an welcher die mindestens eine Trägerplatte (16; 16a) befestigt ist.

4. Dünnschichtbehandlungsapparat nach Anspruch 3, dadurch gekennzeichnet, daß mindestens zwei Trägerplatten (16; 16a) vorgesehen sind, die voneinander unabhängig in Richtung der Achse des Rotors (7) bewegt werden können.

5. Dünnschichtbehandlungsapparat nach einem der Ansprüche 1 bis 4, dadurch gekennzeichnet, daß der Rotor (7) 20 bis 50 Rotorblätter pro Quadratmeter Fläche des Mantels (7a) aufweist.

6. Verwendung eines Dünnschichtbehandlungsapparates nach einem der Ansprüche 1 bis 5 zur Herstellung einer formbaren Celluloselösung aus einer Suspension von Cellulose in einer Lösung eines tertiären Aminoxids in einem Nicht-Lösungsmittel für Cellulose.

## Claims

1. Thin-film treatment apparatus having a cylindrical treatment vessel and a rotor which is centrally mounted in the treatment vessel, which rotor has stirring elements which are adjustable and have an angle of inclination a with respect to the axis of the rotor, characterized in that the rotor (7) has a cylindrical jacket (7a) in which rotor blades (8) are rotatably mounted, it being possible to adjust the angle of inclination a by means of a mechanism which is disposed in the interior of the rotor (7).

2. Thin-film treatment apparatus according to Claim 1, characterized in that the mechanism with which the angle of inclination a can be adjusted comprises essentially at least one carrier plate (16) which is disposed in the rotor (7) at right angles to the axis of the rotor (7) and at least one actuator (15d; 15a) which is joined in a fixed manner to a rotor blade (8), the rotor blade (8) being moved by means of an axial movement of the carrier plate (16; 16a).

3. Thin-film treatment apparatus according to Claim 2, characterized in that the at least one carrier plate (16; 16a) is moved by rotating a shaft (18; 19) which is centrally mounted in the cylindrical rotor (7) and which passes through the centre of the at least one carrier plate (16; 16a), the shaft (18; 19) having on its outside a screw thread which engages in a counter thread which is provided in the interior of a cylindrical sleeve (17; 17a) to which the at least one carrier plate (16; 16a) is attached.

4. Thin-film treatment apparatus according to Claim 3, characterized in that at least two carrier plates (16; 16a) are provided which can be moved independently of one another in the direction of the axis of the rotor (7).

5. Thin-film treatment apparatus according to one of Claims 1 to 4, characterized in that the rotor (7) has 20 to 50 rotor blades per square metre of area of the jacket (7a).

6. Use of a thin-film treatment apparatus according to one of Claims 1 to 5 for producing a mouldable cellulose solution from a suspension of cellulose in a solution of a tertiary amine oxide in a nonsolvent for cellulose.

## Revendications

1. Dispositif de traitement de couche mince comprenant un bac de traitement cylindrique et un rotor, qui est supporté de façon centrale dans le bac de traitement, lequel rotor possède des éléments agitateurs, qui sont réglables et qui présentent un angle d'inclinaison α par rapport à l'axe du rotor, caractérisé en ce que le rotor (7) présente une enveloppe cylindrique (7a) dans laquelle des pales de rotor (8) sont supportées en rotation, l'angle d'inclinaison α pouvant être réglé par l'intermédiaire d'un mécanisme, qui est agencé à l'intérieur du rotor (7).

2. Dispositif de traitement de couche mince suivant la revendication 1, caractérisé en ce que le mécanisme par lequel l'angle d'inclinaison α peut être réglé, consiste essentiellement en au moins une plaque de support (16), qui est agencée dans le rotor (7) à angle droit par rapport à l'axe du rotor (7), et en au moins un organe de réglage (15d; 15a), qui est connecté de façon fixe à une pale du rotor (8), la pale du rotor (8) étant déplacée par un mouvement axial de la plaque de support (16; 16a).

3. Dispositif de traitement de couche mince suivant la revendication 2, caractérisé en ce que chaque plaque de support (16; 16a) est déplacée par la rotation d'un arbre (18; 19), qui est supporté de façon centrale dans le rotor cylindrique (7) et qui passe par le centre de chaque plaque de support (16; 16a), l'arbre (18; 19) présentant sur son côté extérieur un filetage de vis, qui s'engage dans un filetage opposé, qui est prévu à l'intérieur d'une douille cylindrique (17; 17a), à laquelle est fixée chaque plaque de support (16; 16a).

4. Dispositif de traitement de couche mince suivant la revendication 3, caractérisé en ce qu'il est prévu au moins deux plaques de support (16; 16a), qui peuvent être déplacées indépendamment l'une de l'autre dans la direction de l'axe du rotor (7).

5. Dispositif de traitement de couche mince suivant l'une quelconque des revendications 1 à 4, caractérisé en ce que le rotor (7) présente 20 à 50 pales de rotor par mètre carré de surface de l'enveloppe (7a).

6. Utilisation d'un dispositif de traitement de couche mince suivant l'une quelconque des revendications 1 à 5 pour la fabrication d'une solution de cellulose formable à partir d'une suspension de cellulose dans une solution d'un aminoxyde tertiaire dans un agent non solvant pour la cellulose.
